(19) Europäisches Patentamt
European Patent Office
Office européen des brevets

(11) **EP 2 055 365 B1**

(12) **EUROPEAN PATENT SPECIFICATION**

(45) Date of publication and mention
of the grant of the patent:
**28.02.2018  Bulletin 2018/09**

(51) Int Cl.:
*B01D 53/94* *(2006.01)*   *B01J 23/63* *(2006.01)*
*B01J 35/00* *(2006.01)*   *F01N 3/035* *(2006.01)*

(21) Application number: **08164498.1**

(22) Date of filing: **17.09.2008**

(54) **Catalyst-supported particulate filter**

Katalysatorgestützter Partikelfilter

Filtre à particules sur catalyseur

(84) Designated Contracting States:
**DE**

(30) Priority:  **10.10.2007  JP 2007264450**
**10.10.2007  JP 2007264457**
**10.10.2007  JP 2007264475**
**10.10.2007  JP 2007264479**

(43) Date of publication of application:
**06.05.2009  Bulletin 2009/19**

(73) Proprietor: **Mazda Motor Corporation**
**Aki-gun**
**Hiroshima 730-8670 (JP)**

(72) Inventors:
• **Suzuki, Kenji c/o Mazda Motor Corporation**
**Hiroshima 730-8670 (JP)**
• **Harada, Koichiro c/o Mazda Motor Corporation**
**Hiroshima 730-8670 (JP)**
• **Yamada, Hiroshi c/o Mazda Motor Corporation**
**Hiroshima 730-8670 (JP)**
• **Okamoto, Kenji c/o Mazda Motor Corporation**
**Hiroshima 730-8670 (JP)**
• **Takami, Akihide c/o Mazda Motor Corporation**
**Hiroshima 730-8670 (JP)**

(74) Representative: **Herrmann, Uwe**
**Lorenz Seidler Gossel**
**Rechtsanwälte Patentanwälte**
**Partnerschaft mbB**
**Widenmayerstraße 23**
**80538 München (DE)**

(56) References cited:
**EP-A- 1 716 913      EP-A- 1 759 763**
**EP-A- 1 920 835      EP-A- 2 022 554**
**EP-B1- 2 055 366**

**Description**

BACKGROUND OF THE INVENTION

(a) Field of the Invention

This invention relates to catalyst-supported particulate filters.

(b) Description of the Related Art

Exhaust gases from diesel engines using fuels containing diesel oil as a main component and exhaust gases from gasoline engines using fuels containing gasoline as a main component to burn them under fuel-lean conditions are know to contain not only hydrocarbons (HC), carbon monoxide (CO) and nitrogen oxides (NOx), but also particulates (suspended particulate matters containing carbon particles). To restrain particulates in exhaust gas from being exhausted to the atmosphere, a filter for trapping the particulates is disposed in an exhaust gas passage of such an engine. However, when the amount of particulates deposited on the filter becomes large, this causes deterioration of engine power and specific fuel consumption. Therefore, in this case, it is necessary to burn the deposited particulates as appropriate to remove them from the filter.

To effectively burn such deposited particulates (ignite the particulates at relatively low temperature and burn them out in a short period of time), a catalyst layer containing alumina carrying platinum (Pt) as a catalytic metal is formed on the walls of exhaust gas channels in the body of such a filter. Such Pt-carried alumina is affective in burning particulates as well as converting HC and CO, but there have been recently developed catalyst materials for filters capable of more efficiently burning particulates.

Published Japanese Patent Application No. 2006-326573 describes the use of such a catalyst material in a filter. The catalyst material is a material in which a catalytic metal, such as Pt, is carried on a mixed oxide (composite oxide) containing cerium (Ce), zirconium (Zr) and a rare earth metal R selected from among praseodymium (Pr), neodymium (Nd) and lanthanum (La). The published document also describes that the content of R in the mixed oxide is preferably 2% to 11% by mole, both inclusive. Since such a mixed oxide contains Ce, it has oxygen storage/release capacity so that oxygen released from the mixed oxide promotes ignition and burning of particulates.

Published Japanese Patent Application No. 2007-54713 describes the use of another catalyst material in a filter. The catalyst material is a material in which a catalytic metal is carried on mixed oxide ZrRO particles containing Zr and a rare earth metal R selected from among ytterbium (Yb), Nd and scandium (Sc) and having an R content of up to 18% by mole and mixed oxide CeMO particles containing Ce and a rare earth metal M selected from among samarium (Sm) and gadolinium (Gd). The ZrRO particles have oxygen ion conductivity to thereby release active oxygen but their oxygen release mechanism is different from that of CeZr-based mixed oxides as disclosed in Published Japanese Patent Application No. 2006-326573.

Specifically, CeZr-based mixed oxides have high oxygen storage capacity and release active oxygen by the valence change of Ce ions. On the other hand, the ZrRO particles have oxygen ion conductivity, i.e., so-called oxygen pumping function, and, when having both of high-oxygen concentration sites and low-oxygen concentration sites on the particle surfaces, transport oxygen ions from high-oxygen concentration sites to low-oxygen concentration sites and then release them as active oxygen.

Therefore, for the ZrRO particles, when a small ignition site causing particulates to burn is formed on their surface and then falls into lack of oxygen, oxygen is transported from other high-oxygen concentration sites. Thus, the burning is continued and the burning region on each particle can be easily extended from the ignition site to the surrounding sites.

Published Japanese Patent Application No. 2007-83224 describes the use of still another catalyst material in a filter. The catalyst material is a material in which a catalytic precious metal is carried on ZrRO having oxygen ion conductivity as stated above and alumina.

Published Japanese Patent Application No. 2007-98200 may be considered the closest prior art and describes a method for manufacturing a catalyst material for converting exhaust gas components. In this method, an excessive amount of aqueous ammonia is first added to a mixture of an aqueous solution of aluminium nitrate and an aqueous solution of lanthanum nitrate to precipitate a fist hydroxide containing Al and La, Next, a mixture of an aqueous solution of cerium nitrate and an aqueous solution of zirconium nitrate is further added to the above mixture to precipitate a second hydroxide containing Ce and Zr over the precipitate of the first hydroxide. Then, the obtained precipitate of the first and second hydroxides is filtrated, dried and calcined. According to this method, a catalyst material is obtained in which each of activated alumina particles containing La forms a core and the whole surface of the core is covered with a CeZr-mixed oxide serving as a shell.

The post-published document EP 1 920 835 A1 relates to a catalyst-carried particulate filter containing a catalyst obtained by mixing Pt/alumina, a first and a second oxide, in form of powders, wherein the first oxide is a mixed oxide such as Ce-Zr-based mixed oxide or a Ce-Zr-Nd-based mixed oxide, wherein the second oxide is a mixed oxide containing Zr and a rare earth element other than Ce, such as a Zr-Nd-based mixed oxide.

The post-published document EP 2 022 554A2 discloses a catalyst-supported particulate filter which is essentially composed of a combination of Pt-carried activated alumina, a ZrNd-based mixed oxide containing a rare earth metal M other than Ce and Nd, and a CeZr-based mixed oxide containing a rare earth metal R other than Ce, wherein all of the activated alumina particles, the ZdNd-based mixed oxide particles and CeZr-based mixed oxide particles are secondary particles formed by adhesion of primary particles.

SUMMARY OF THE INVENTION

The above CeZr-based mixed oxide particles having oxygen storage capacity and the above Zr-based mixed oxide particles having oxygen ion conductivity promote the conversion of HC and CO by oxidation and also promote the ignition and burning of particulates deposited on the filter. These mixed oxide particles, however, have the following problems.

These mixed oxide particles can be obtained by a coprecipitation method in which a basic solution is added to and mixed with an acid solution containing metal ions, such as Ce or Zr, to obtain a precipitate and the precipitate is dried and calcined. In this case, primary particles of a mixed oxide are formed by calcining the precipitate and secondary particles are formed by cohesion and growth of the primary particles. If such mixed oxide secondary particles are exposed to high-temperature exhaust gas, they further cohere and grow to reduce their surface areas. Thus, exhaust gas is prevented from smoothly diffusing into the insides of the particles and in turn catalytic metal particles are buried in the particles or cohere, which deteriorates the HC and CO conversion performance and the particulate burning property.

Furthermore, for CeZr-based mixed oxide particles having oxygen storage capacity, oxygen storage and release occur mainly at their surfaces and their insides are hardly involved in oxygen storage and release. Therefore, if the particle size increases, each particle increases the internal volume not used for oxygen storage and release and accordingly deteriorates the oxygen storage/release efficiency.

For Zr-based mixed oxide particles having oxygen ion conductivity, if the particle size increases, each particle increases the distance for which an oxygen ion is conducted from a high-oxygen concentration site on the surface through the inside to a low-oxygen concentration on the surface and the oxygen concentration gradient in the inside of the particle decreases. As a result, its oxygen ion conductivity deteriorates and the amount of oxygen supplied from the inside of the particle is reduced.

For the catalyst material disclosed in Published Japanese Patent Application No. 2007-98200, the Ce-Zr mixed oxide particles serving as a shell have relatively small particle size and the activated alumina particle serving as a core also has a small particle size (approximately 0.05 $\mu$m at maximum). The reason for this is as follows. The precursor of the activated alumina primary particle is a precipitated particle of a hydroxide containing Al and La. A hydroxide containing Ce and Zr (a Ce-Zr mixed oxide precursor) precipitates over the precipitated particle serving as the precursor of the primary particle to cover the precipitated particle. As a result, the Ce-Zr mixed oxide prevents cohesion of activated alumina particles, whereby the activated alumina particles have small particle size.

Thus, the whole surface of each activated alumina particle is covered with Ce-Zr mixed oxide particles. Therefore, the catalytic metal is carried on the Ce-Zr mixed oxide particles but hardly carried on the activated alumina particles serving as cores. As a result, the activated alumina particles are not effectively used as a support material allowing the catalytic metal to be carried on the catalyst with high dispersivity, whereby the catalyst cannot be expected to provide a high catalytic activity. Furthermore, the catalyst particles (particles in each of which the surface of an activated alumina particle is covered with Ce-Zr mixed oxide particles) are in contact at their Ce-Zr mixed oxide particles of the same composition with each other. Therefore, when exposed to high-temperature exhaust gas, the catalyst particles are likely to cohere and grow, which may deteriorate the catalytic activity.

With the foregoing in mind, an object of the invention is to provide a catalyst-supported particulates filter enhancing the conversion performance for exhaust gas components (including HC, CO and particulate) and enhancing the heat resistance of the catalyst material.

Specifically, an aspect of the invention is a particulates filter in which a catalyst layer is formed on the walls of exhaust gas channels in a filter body for trapping particulates exhausted from an engine, the catalyst layer containing a catalyst material in the form of secondary particles, each secondary particle being formed so that primary particles of activated alumina, primary particles of a Zr-based mixed oxide containing Zr and a rare earth metal Z are mixed and cohere together.

According to this aspect of the invention, primary particles of the Zr-based mixed oxide are mixed with the other kind or kinds of primary particles to form a secondary particle. Therefore, even when the particulate filter is exposed to high-temperature exhaust gas or reaches a high temperature, primary particles of the Zr-based mixed oxide are prevented from cohering together and thereby growing by the other kind or kinds of primary particles, which avoids deterioration of the catalyst material.

In each secondary particle, the Zr-based mixed oxide is dispersed in the form of small particles. Thus, in each of the Zr-based mixed oxide particles constituting part of the secondary particle, the amount of oxygen ions supplied from high-oxygen concentration sites on the particle surface to low-oxygen concentration sites thereon increases, which is advantageous in promoting the oxidation of HC and CO and the burning of particulates.

In addition, since the catalyst material is formed in the form of secondary particles by the mixture of two or more kinds of primary particles, the carrying of a catalytic metal on the catalyst material composed of secondary particles is equivalent to the carrying, of the catalytic metal on various kinds of primary particles exposed on the surface of each secondary particle, which is advantageous in promoting the oxidation of HC and CO and the burning of particulates.

The catalyst material comprises secondary particles in each of which primary particles of the activated alumina and primary particles of the Zr-based mixed oxide cohere together. In this case, each of the primary particles of the Zr-based mixed oxide preferably contains, as the rare earth metal Z, Nd and a rare earth metal M other than Ce and Nd. This gives advantage in promoting the oxidation of HC and CO and the burning of particulates.

In the above case, when the particulate filter is exposed to high-temperature exhaust gas or reaches a high temperature, the mixed oxide particles prevent the activated alumina particles from cohering together and growing. In addition, the activated alumina particles prevent the Zr-based mixed oxide particles from cohering together and growing.

When a catalytic metal is carried on the catalyst material, the catalytic metal is carried not only on the Zr-based mixed oxide particles but also on the activated alumina particles. Therefore, tire activated alumina particles having large specific surface area effectively act as a support material for carrying the catalytic metal with high dispersivity, whereby oxidation of HC and CO in exhaust gas and oxidation of NO in exhaust gas into $NO_2$ can be accomplished using the catalytic metal carried on the activated alumina particles. Furthermore, heat produced by oxidation reaction of these exhaust gas components promotes the burning of the particulates and produced $NO_2$ serves as an oxidizing agent for efficiently burning the particulates, Furthermore, the catalytic metal effectively acts to promote me conduction of oxygen ions in the Zr-based mixed oxide particles and active oxygen released from the Zr-based mixed oxide particles is efficiently used when the catalytic metal promotes the oxidation of HC and CO and the burning of particulates.

Each of the primary particles of the Zr-based mixed oxide contains $ZrO_2$ at a proportion of 55% to 78% by mole, both inclusive. This provides high particulate burning property while enhancing HC and CO conversion performance at low temperatures.

The proportion of the primary particles of the Zr-based mixed oxide in the total amount of the primary particles of the activated alumina and the primary particles of the Zr-based mixed oxide is 25% to 90% by mass, both inclusive. This provides high particulate burning property while enhancing HC and CO conversion performance at low temperatures. More preferably, the proportion of the mixed oxide primary particles is 25% to 50% by mass, both inclusive.

Examples of the rare earth metal M contained in the Zr-based mixed oxide particle include La, Pr, Sm, Gd and Y (yttrium). What is preferable in enhancing the particulate burning property is the use of at least one selected from the group consisting of La and Pr.

Pt is used as the catalytic metal. This is advantageous in oxidation of NO in exhaust gas into $NO_2$. Thus, particulates can be efficiently burned using $NO_2$ as an oxidizing agent.

BRIEF DESCRIPTION OF THE DRAWINGS

Figure 1 is a schematic view showing the state that a particulate filter is disposed in an exhaust gas passage of an engine.

Figure 2 is a front view schematically showing the particulate filter.

Figure 3 is a longitudinal cross-sectional view schematically showing the particulate filter.

Figure 4 is an enlarged cross-sectional view schematically showing a wall that separates an exhaust gas inflow channel from an exhaust gas outflow channel in the particulate filter.

Figure 5 is a schematic view showing a catalyst particle according to Embodiment 1.

Figure 6 is a graph showing the relation between carbon burning rate and the proportion of each of two kinds of rare earth metal M oxides in their respective Zr-based mixed oxides.

Figure 7 is a graph showing the relation between carbon burning rate and the $ZrO_2$ ratio of each of inventive examples according to Embodiment 1 and comparative examples.

Figure 8 is a graph showing the relation between carbon burning rate and the ZrNdMO ratio of each of inventive examples according to Embodiment 1 and comparative examples.

Figure 9 is a graph showing the relation between light-off temperature and the $ZrO_2$ ratio of each of inventive examples according to Embodiment 1 and comparative examples.

Figure 10 is a graph showing the relation between light-off temperature and the ZrNdMO ratio of each of inventive examples according to Embodiment 1 and comparative examples.

DETAILED DESCRIPTION OF THE INVENTION

Hereinafter, embodiments of the present invention will be described with reference to the drawings, Note that the following description of the preferred embodiments is merely illustrative in nature and is not intended to limit the scope, applications and use of the invention.

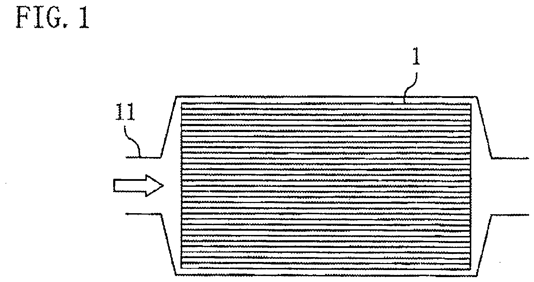

In Figure 1, reference numeral 1 denotes a particulate filter (hereinafter, referred to simply as a "filter") disposed in an exhaust gas passage 11 of an engine. An oxidation catalyst (not shown) can be disposed in the exhaust gas passage 11 upstream of the filter 1 in the flow direction of exhaust gas. Such an oxidation catalyst is obtained by carrying a catalytic metal, such as platinum (Pt) or palladium (Pd), on a support material such as activated alumina. When such an oxidation catalyst is disposed upstream of the filter 1, HC and CO in the exhaust gas are oxidized by the oxidation catalyst and heat of the oxidation combustion increases the temperature of exhaust gas flowing into the filter 1. Furthermore, NO in the exhaust gas is oxidized into $NO_2$ by the oxidation catalyst and produced NO2 is then supplied as an oxidizing agent for burning particulates to the filter 1.

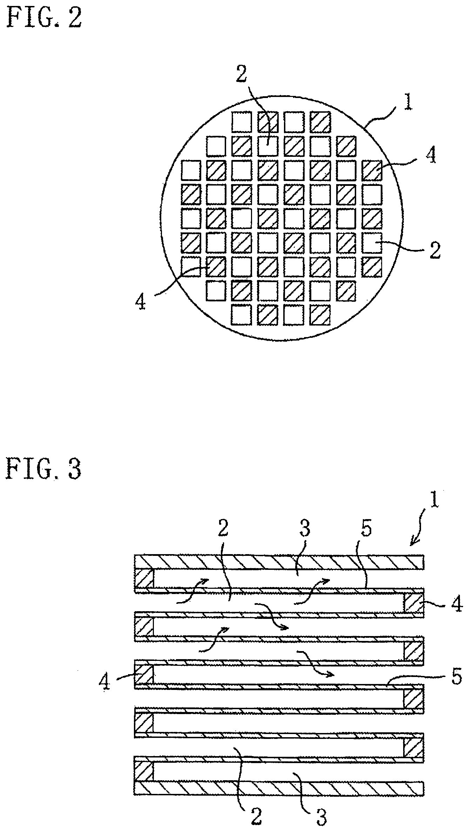

As schematically shown in Figures 2 and 3, the filter 1 has a honeycomb structure in which a large number of exhaust gas channels 2 and 3 run in parallel with each other. Specifically, the filter 1 has a structure in which a plurality of exhaust gas inflow channels 2 and a plurality of exhaust gas outflow channels 3 are alternately arranged vertically and horizontally. Each exhaust gas inflow channel 2 is closed at the downstream end by a plug 4, while each exhaust gas outflow channel 3 is closed at the upstream end by a plug 4. The adjacent exhaust gas inflow and outflow channels 2 and 3 are separated from each other by a thin partition wall 5. In Figure 2, the hatched parts denote the plugs 4 at the upstream ends of the exhaust gas outflow channels 3.

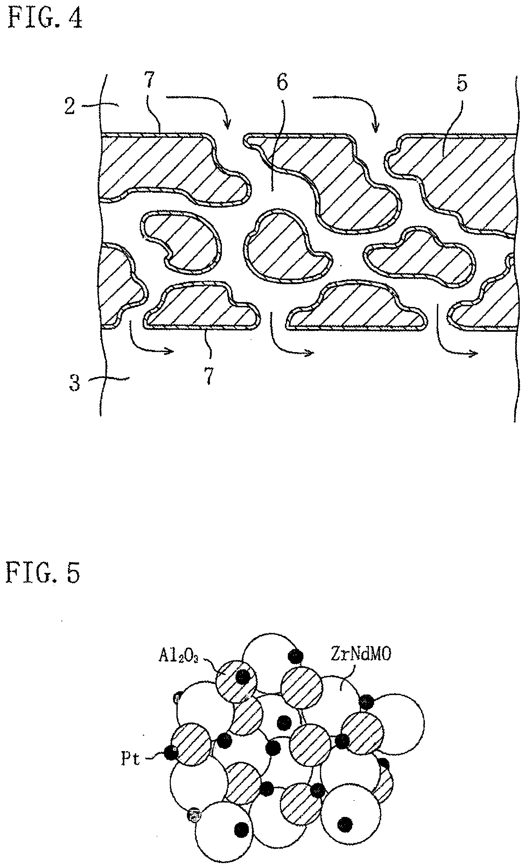

The body of the filter 1, inclusive of the partition walls 5, is formed of cordierite or an inorganic porous material, such as SiC, $Si_3N_4$ or salon. The exhaust gas flowing into each exhaust gas inflow channel 2 flows out through the surrounding partition walls 5 into the adjacent exhaust gas outflow channels 3, as shown in the arrows in Figure 3. More specifically, as shown in Figure 4, each partition wall 5 has micro pores (exhaust gas channels) 6 communicating the exhaust gas inflow channel 2 with the adjacent exhaust gas outflow channel 3 so that the exhaust gas flows through the micro pores 6. Particulates are trapped and deposited mainly on the wall surfaces of the exhaust gas inflow channels 2 and the micro pores 6.

A catalyst layer 7 is coated on the walls of all the exhaust gas channels (i.e., exhaust gas inflow channels 2, exhaust gas outflow channels 3 and micro pores 6) in the body of the filter 1. However, it is not necessarily required to form the catalyst layer on the walls of the exhaust gas outflow channels 3.

A description is given below of Embodiments 1 to 4 having different catalyst materials used for their respective catalyst layers 7.

Embodiment 1

A feature of this embodiment is that the catalyst layer 7 contains catalyst particles (a catalyst material) as schematically shown in Figure 5. Specifically, the catalyst particle is a secondary particle formed so that primary particles of activated alumina (hatched particles; $Al_2O_3$) and primary particles of a Zr-based mixed oxide that contains Zr and a rare earth metal Z containing no Ce and composed of Nd and a rare earth metal M other than Ce and Nd (particles indicated by unfilled circles; ZrNdMO) are mixed and cohere together. Pt particles (indicated by filled circles) are carried as a catalytic metal on each primary particle of activated alumina ($Al_2O_3$) and each primary particle of the Zr-based mixed oxide (ZrNdMO). The primary particles of activated alumina have a mean particle size of 1 to 100 nm and the primary particles of the Zr-based mixed oxide have a mean particle size of 5 to 50 nm.

<Preparation of Catalyst Material>

The catalyst material can be prepared according to the following method.

- Preparation of Activated Alumina Particle Precursor -

First, an acid solution containing Al ions and La ions is prepared. Aluminium nitrate emieahydrate and lanthanum nitrate hexahydrate can be used as source materials for Al and La, respectively. Respective given amounts of the Al source material and the La source material are mixed with water to prepare a source solution having acidity.

A basic solution is added to the source solution and mixed to produce precipitated particles of an Al-La mixed hydroxide that is a precursor of activated alumina primary particles. In this case, for example, the source solution is stirred at room temperature for about one hour and aqueous ammonia with a concentration of about 7%, for example, is then mixed as a basic solution to the source solution. Instead of the aqueous ammonia, another basic solution, such as an aqueous solution of caustic soda, may be used.

- Preparation of Zr-Based Mixed Oxide Particle Precursor -

First, an acid solution containing Zr ions, Nd ions and ions of a rare earth metal M other than Ce and Nd is prepared. Zirconium oxynitrate dihydrate and neodynium nitrate can be used as source materials for Zr and Nd, respectively. A nitrate salt of La, Pr or Y can be used as a source material for the rare earth metal M. Respective given amounts of the Zr source material, the Nd source material and the M source material are mixed with water to prepare a source solution having acidity.

A basic solution is added to the source solution and mixed to produce precipitated particles of a Zr-Nd-M mixed hydroxide that is a precursor of Zr-based mixed oxide primary particles. In this case, for example, the source solution is stirred at room temperature for about one hour and aqueous ammonia with a concentration of about 7%, for example, is then mixed as the basic solution to the source solution. Instead of the aqueous ammonia, another basic solution, such as an aqueous solution of caustic soda, may be used.

- Mixing of Activated Alumina Particle Precursor and Zr-Based Mixed Oxide Particle Precursor -

The activated alumina particle precursor and the Zr-based mixed oxide particle precursor, which are obtained in the above steps, are mixed. Specifically, a solution containing a precipitate of the activated alumina particle precursor is mixed with a solution containing a precipitate of the Zr-based mixed oxide particle precursor. In this case, the two solutions are previously formulated to have the same pH.

- Rinsing and Dehydration -

The mixed solution containing a precipitate of the activated alumina particle precursor and the Zr-based mixed oxide particle precursor is subjected to centrifugation to remove the supernatant liquid. Ion-exchanged water is further added to the dehydrated precipitate obtained by the removal of the supernatant liquid, stirred and subjected to centrifugation (dehydrated) again. This cycle of rinsing and dehydration is repeated several times. By repeating the cycle of rinsing and dehydration, the remaining basic solution is removed.

- Drying and Calcining -

The dehydrated precipitate is dried, then calcined and ground. The drying can be implemented, for example, by keeping the dehydrated precipitate at a temperature of about 100°C to about 250°C for a predetermined time in the atmospheric environment. The calcining can be implemented, for example, by keeping the dehydrated precipitate at a temperature of about 400°C to about 600°C for several hours in the atmospheric environment. Thus, a support material is obtained in the form of a powder of secondary particles in each of which primary particles of activated alumina containing La and primary particles of the Zr-based mixed oxide containing Zr, Nd and the rare earth metal M are mixed and cohere together.

- Carrying of Catalytic Metal on Support Material -

The obtained powdered support material is mixed with a catalytic metal solution containing catalytic metal ions and then evaporated to dryness to obtain a dried residue. The residue is ground. Thus, a catalyst material composed of catalyst particles as shown in Figure **5** is obtained. Examples of the catalytic metal solution used include a precious metal solution, such as a solution of diamminedinitro platinum nitrate or an aqueous solution of palladium nitrate. To obtain a catalyst material, the powdered support material may be impregnated with the catalytic metal solution, dried and calcined.

<Preferred Zr-Based Mixed Oxide Particle>

A description is given below of a preferred composition of the Zr-based mixed oxide particle with reference to the following carbon burning property test in which carbon particulates were used as particulates.

- Preparation of Samples -

To determine a preferred composition of the Zr-based mixed oxide, various kinds of Zr-based mixed oxide powders using La, Pr and Y as the rare earth metal M and having different proportions of $Nd_2O_3$ and different proportions of rare earth metal M oxide were prepared. First, Pt-carried catalyst materials were prepared by mixing each kind of Zr-based mixed oxide powder with a solution of diamminedinitro platinum nitrate and ion-exchanged water, evaporating the mixture to dryness, then well drying it and calcining it at 500°C for two hours in the atmospheric environment. Note that the catalyst materials contained no activated alumina.

Then, samplers (catalyst-supported particulate filters) were obtained by mixing each of the obtained catalyst materials with a binder and ion-exchanged water into a slurry, coating the slurry on a support for a filter made of silicon carbide (SiC) having a volume of 25 mL, a cell wall thickness of 16 mil (406.4 x 10$^{-3}$ mm) and 178 cpsi (i.e., the number of cells per square inch (645.16 mm$^2$)), then drying it and calcining it by keeping it at 500°C for two hours in the atmospheric environment. The amount of each Zr-based mixed oxide powder carried per L of filter was 50 g/L, and the amount of Pt carried per L of filter was 0.5 g/L. Then, each sample was heat aged by keeping it at 800°C for 24 hours in the atmospheric environment.

Next, 10 mL ion-exchanged water was added to an amount of carbon (carbon black) corresponding to 10g per L of filter and stirred for five minutes with a stirrer, thereby well dispersing carbon into the water. One end surface of each sample was dipped into the carbon-dispersed water and, concurrently, water in the sample was aspirated from the other end surface with an aspirator. Water having not been removed by the aspiration was removed by air blow from the one end surface and the sample was then put in a dry oven and dried therein by keeping it at 150°C for two hours. Thus, carbon was deposited on the walls of exhaust gas channels in the sample filter.

- Carbon Burning Property Test -

The sample was attached to a fixed-bed, simulated gas flow reactor. In this state, simulated exhaust gas (composed of 10% $O_2$, 300ppm NO, 10% $H_2O$ and $N_2$) was allowed to flow through the sample at a space velocity of 80000/h and, concurrently, the gas temperature at the catalyst sample entrance was increased at a rate of 15°C/min. Then, the amount of CO produced and the carbon burning rate at the time when the gas temperature reaches 590°C were measured. The carbon burning rate was calculated based on the amounts of CO and $CO_2$ produced by carbon burning and according to the following equation. The measurement results are shown in Table 1.

$$\text{Carbon burning rate (g/hr)} = \{\text{gas flow rate (L/hr)} \times [(CO+CO_2) \text{ concentration}$$

$$(ppm)/(1 \times 10^6)]\} \times 12 \text{ (g/mol)} / 22.4 \text{ (L/mol)}$$

[Table 1]

| Sample Number | Nd oxide (% by mole) | M oxide (% by mole) | Type of M | Total amount (% by mole) | Carbon burning rate at 590°C (g/hr) | Produced CO (ppm) |
|---|---|---|---|---|---|---|
| 1 | 12.0 | 0.0 | - | 12.0 | 0.70 | - |
| 2 | 20.0 | 0.0 | - | 20.0 | 0.71 | - |
| 3 | 0.0 | 12.0 | La | 12.0 | 0.68 | - |
| 4 | 0.0 | 12.0 | Pr | 12.0 | 0.69 | - |
| 5 | 6.0 | 6.0 | La | 12.0 | 0.72 | - |
| 6 | 6.0 | 12.0 | La | 18.0 | 0.72 | - |
| 7 | 12.0 | 3.0 | La | 15.0 | 0.74 | - |
| 8 | 12.0 | 6.0 | La | 18.0 | 0.79 | - |
| 9 | 12.0 | 12.0 | La | 24.0 | 0.75 | - |
| 10 | 18.0 | 6.0 | La | 24.0 | 0.78 | - |
| 11 | 18.0 | 12.0 | La | 30.0 | 0.77 | - |
| 12 | 6.0 | 6.0 | Pr | 12.0 | 0,71 | - |

(continued)

| Sample Number | Nd oxide (% by mole) | M oxide (% by mole) | Type of M | Total amount (% by mole) | Carbon burning rate at 590°C (g/hr) | Produced CO (ppm) |
|---|---|---|---|---|---|---|
| 13 | 6.0 | 12.0 | Pr | 18.0 | 0.77 | - |
| 14 | 12.0 | 3.0 | Pr | 15.0 | 0.72 | - |
| 15 | 12.0 | 6.0 | Pr | 18.0 | 0.74 | - |
| 16 | 12.0 | 12.0 | Pr | 24.0 | 0.82 | 4 |
| 17 | 12.0 | 18.0 | Pr | 30.0 | 0.87 | 5 |
| 18 | 12.0 | La:3.0, Pr: 12.0 | La, Pr | 27.0 | 0.87 | 5 |
| 19 | 12.0 | La:3.0, Pr: 18.0 | La, Pr | 33.0 | 1.10 | 8 |
| 20 | 18.0 | 12.0 | Pr | 30.0 | 0.91 | 8 |
| 21 | 6.0 | 6.0 | Y | 12.0 | 0.72 | - |
| 22 | 12.0 | 3,0 | Y | 15.0 | 0.73 | - |
| 23 | 12.0 | 6.0 | Y | 18.0 | 0.74 | - |
| 24 | 12.0 | 12.0 | Y | 24.0 | 0.77 | - |
| 25 | 18.0 | 12.0 | Y | 30.0 | 0.80 | - |

Table 1 shows that Samples 5, 12 and 21 containing a combination of La, Pr or Y with Nd exhibited higher carbon burning rates than Samples 3 and 4 containing no Nd. Therefore, it is can be said to be preferable that Nd is an essential ingredient for the Zr-based mixed oxide. However, in the case where only Nd is used as the rare earth metal as in Samples 1 and 2, the carbon burning rate did not increase with increasing amount of Nd. Therefore, it can be said to be preferable that the Zr-based mixed oxide contains Nd in combination with La, Pr or Y.

Comparison among the cases where the proportion of rare earth metal M oxide is low (among Samples 7, 14 and 22 and among Samples 8, 15 and 23) shows that the use of La as the rare earth metal M is more advantageous than the use of Pr or Y in increasing the carbon burning rate. On the other hand, comparison among the cases where the proportion of rare earth metal M oxide is high (between Samples 6 and 13 and among Samples 11, 20 and 25) shows that the use of Pr as the rare earth metal M is more advantageous than the use of La or Y in increasing the carbon burning rate.

Furthermore, as the proportion of the total amount of neodymium oxide and M oxide increased, the carbon burning rate generally increased, with minor exceptions. However, as seen from the results of Samples 16 to 20, when the above total amount increased and the carbon burning rate increased accordingly, the amount of CO produced due to imperfect combustion of carbon tended to increase. Therefore, although it is advantageous in enhancing the particulate burning property that the proportion of the above total amount is high, the proportion is preferably not more than 45% by mole and more preferably not more than 40% by mole in order to restrain the increase in the amount of CO produced.

On the other hand, when the proportion of the above total amount reached 20% by mole or more, the carbon burning rate generally became high. Therefore, it can be said to be preferable that the proportion of the above total amount is not less than 20% by mole in enhancing the particulate burning property. Particularly, it is preferable to attain a proportion of the above total amount of 20% by mole or more while raising the proportion of neodymium oxide or praseodymium oxide.

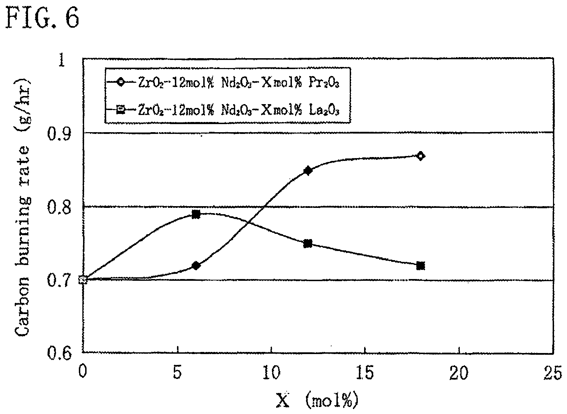

Figure 6 shows results when samples obtained by coating different Zr-based mixed oxides using Pr or La as the rare earth metal M and containing no activated alumina on their respective SiC-made filter supports having the same cell wall thickness and number of cells but different from those of the samples in Table 1 were measured in terms of carbon burning rate at 590°C under the same conditions as the above test on the samples in Table 1. Note that the proportion of $Nd_2O_3$ (hereinafter, referred to as "$Nd_2O_3$ ratio") was fixed at 12% by mole because Table 1 shows that the Zr-based mixed oxide exhibited good results when its $Nd_2O_3$ ratio was 18% by mole or smaller. The filter body had a volume of 25 mL, a cell wall thickness of 12 mil and 300 cpsi. Furthermore, like the above test, the amount of each Zr-based mixed oxide powder carried per L of filter was 50 g/L and the amount of Pt carried per L of filter was 0.5 g/L. Each sample was heat aged by keeping it at 800°C for 24 hours in the atmospheric environment.

Figure **6** shows that it is preferable that the Zr-based mixed oxide uses Pr as the rare earth metal M and has

a proportion of $Pr_2O_3$ of 6% by mole or higher in order to increase the carbon burning rate.

<Preferred Composition of Catalyst Particle>

A description is given below of a preferred composition of the catalyst particle with reference to the following carbon burning property test using carbon particulates as particulates and the following exhaust gas (HC and CO) conversion performance test.

- Preparation of Samples -

According to the above-stated method for preparing a catalyst material, various kinds of catalyst materials of inventive examples were prepared that have different proportions of $ZrO_2$ in Zr-based mixed oxide primary particle ($ZrO_2$/ZrNdMO shown in % by mole and hereinafter referred to as "$ZrO_2$ ratios") and different proportions of Zr-based mixed oxide particles in the total amount of activated alumina particles (having a proportion of $La_2O_3$ of 5% by mass) and the Zr-based mixed oxide particles (hereinafter referred to as "ZrNdMO ratios"). Pr was used as the rare earth metal M for the Zr-based mixed oxide particle and the proportion of $Pr_2O_3$ (hereinafter referred to as "$Pr_2O_3$ ratio") was fixed at 12% by mole. Furthermore, the catalytic metal Pt was carried on each support material by evaporation to dryness.

Furthermore, catalyst materials of comparative examples were obtained by preparing different kinds of Zr-based mixed oxide secondary particles having different $ZrO_2$ ratios and the same $Pr_2O_3$ ratio of 12% by mole by coprecipitation, physically mixing each of them with La-contained activated alumina secondary particles having a proportion of $La_2O_3$ of 5% by mass at an appropriate mixing ratio to obtain various kinds of powdered support materials and carrying Pt on each of them by evaporation to dryness.

Then, according to the previously stated method for preparing a sample, samples (catalyst-supported particulate filters) were obtained by coating the catalyst materials of the inventive examples and comparative examples on their respective SiC-made filter supports having a volume of 25 mL, a cell wall thickness of 12 mil and 300 cpsi. The amount of each catalyst material carried per L of filter was 50 g/L, and the amount of Pt carried per L of filter was 1.0 g/L. Then, each sample was heat aged by keeping it at 800°C for 24 hours in the atmospheric environment.

- Evaluation on Carbon Burning Property -

For each of the samples of the inventive examples and comparative examples, an amount of carbon (carbon black) corresponding to 10g per L of filter was deposited on the walls of exhaust gas channels in the sample and the sample was then measured in terms of carbon burning rate at 590°C according to the above-stated carbon burning property test.

The measurement results on the inventive examples and the measurement results on the comparative examples are shown in Tables 2 and 3, respectively.

Hereinafter, each of the samples of the inventive examples and comparative examples shown in Tables 2 and 3 was identified by the number of two places by placing the number for $ZrO_2$ ratio of the sample in the ten's place and placing the number for ZrNdMO ratio of the sample in the one place. For example, the inventive example having a $ZrO_2$ ratio of 75% by mole (corresponding to the number for the ratio, "2") and a ZrNdMO ratio of 50% by mass (corresponding to the number for the ratio, "3") is preferred to as "Inventive Example 23". This applies also to Tables 4 and 5 described later.

[Table 2]

| Inventive Example; Carbon burning rate (g/hr, 590°C) | | | $ZrO_2$/ZrNdMO ratio | | | |
|---|---|---|---|---|---|---|
| | | | No.1 | No.2 | No.3 | No.4 |
| | | | 55% by mole | 75% by mole | 80% by mole | 90% by mole |
| ZrNdMO/ (ZrNdMO +$Al_2O_3$) ratio | No.1 | 10% by mass | 0.94 | 0.87 | 0.82 | 0.77 |
| | No.2 | 25% by mass | 1.05 | 0.94 | 0.86 | 0.79 |
| | No.3 | 50% by mass | 1.01 | 0.9 | 0.85 | |
| | No.4 | 75% by mass | 0.92 | 0.86 | 0.82 | |
| | No.5 | 90% by mass | 0.85 | 0.79 | 0.8 | |
| Each of mixed oxide ZrNdMO and activated alumina is in the form of primary particles. | | | | | | |

## EP 2 055 365 B1

[Table 3]

| Comparative Example; Carbon burning rate (g/hr, 590°C) | | | | | | |
|---|---|---|---|---|---|---|
| | | | ZrO$_2$/ZrNdMO ratio | | | |
| | | | No.1 | No.2 | No.3 | No.4 |
| | | | 55% by mole | 75% by mole | 80% by mole | 90% by mole |
| ZrNdMO/ (ZrNdMO +Al$_2$O$_3$) ratio | No.1 | 10% by mass | 0.95 | 0.87 | 0.85 | 0.79 |
| | No.2 | 25% by mass | 0.96 | 0.9 | 0.875 | 0.82 |
| | No.3 | 50% by mass | 0.91 | 0.86 | 0.8 | |
| | No.4 | 75% by mass | 0.82 | | | |
| | No.5 | 90% by mass | 0.75 | | | |
| Each of mixed oxide ZrNdMO and activated alumina is in the form of secondary particles. | | | | | | |

Reference to Tables 2 and 3 shows that when the ZrO$_2$ ratio was 55% to 75% by mole, both inclusive, and the ZrNdMO ratio was 25% to 90% by mass, both inclusive, the inventive examples exhibited higher carbon burning rates than the comparative examples. The reason for these results can be considered to be that since in the inventive examples activated alumina and each kind of Zr-based mixed oxide were mixed together in the form of their primary particles of small particle size to form secondary particles each composed of a mixture of their primary particles, the amount of oxygen ions supplied by the Zr-based mixed oxide increased and the heat resistance of the catalyst material increased. Particularly, Inventive Example 12 (having a ZrO$_2$ ratio of 55% by mole and a ZrNdMO ratio of 25% by mass) exhibited a good result.

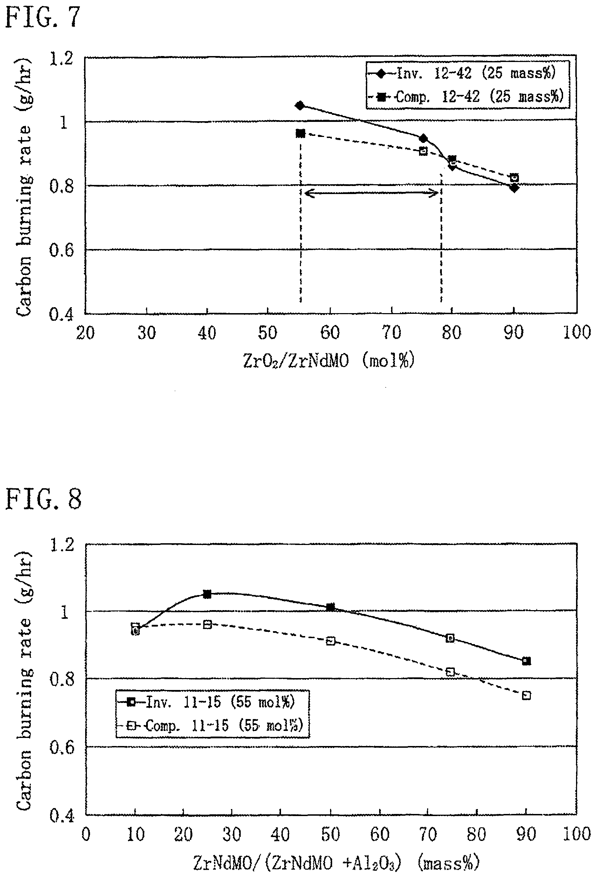

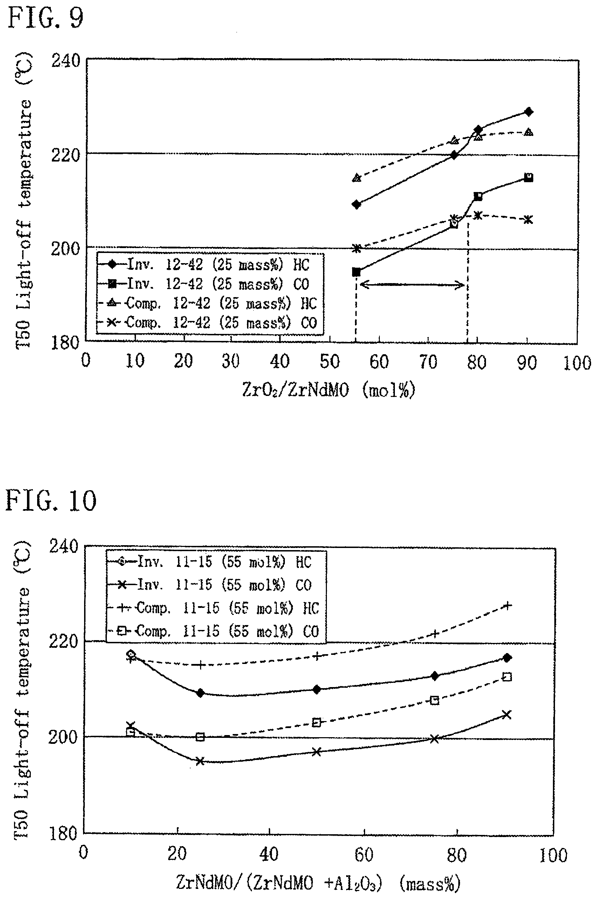

In this context, graphically shown in Figure **7** are the carbon burning rates of Inventive Examples 12, 22, 32 and 42 and Comparative Examples 12, 22, 32 and 42 having a fixed ZrNdMO ratio of 25% by mass and different ZrO$_2$ ratios. Furthermore, graphically shown in Figure **8** are the carbon burning rates of Inventive Examples 11 to 15 and Comparative Examples 11 to 15 having a fixed ZrO$_2$ ratio of 55% by mole and different ZrNdMO ratios. Note that in the graph of Figure 7 "25% by mass" described in the window in which the classification of the characteristic lines is explained indicates the ZrNdMO ratio and that in the graph of Figure 8 "55% by mole" described in the window in which the classification of the characteristic lines is explained indicates the ZrO$_2$ ratio. This applies also to Figures **9** and **10** described later.

Reference to Figure **7** shows that when the ZrO$_2$ ratio was 55% to 78% by mole, both inclusive, the inventive examples had higher carbon burning rates than the comparative examples and that particularly when the ZrO$_2$ ratio was 55% to 75% by mole, both inclusive, the inventive examples exhibited relatively significant differences in carbon burning rate from the comparative examples.

Reference to Figure **8** shows that when the ZrNdMO ratio was 25% to 90% by mass, both inclusive, the inventive examples had higher carbon burning rates than the comparative examples and that particularly when the ZrNdMO ratio was 25% to 50% by mass, both inclusive, the inventive examples exhibited relatively high carbon burning rates.

- Evaluation of Light-off Performance for Exhaust Gas Conversion -

Each of the samples of the inventive examples and comparative examples was measured in terms of light-off performance for conversion of HC and CO in exhaust gas, unlike the above carbon burning property test, without deposition of carbon black. Specifically, the sample was set to a simulated gas flow reactor. In this state, simulated exhaust gas (composed of 10% O$_2$, 10% H$_2$O, 100ppm NO, 200ppmC C$_3$H$_6$, 400ppm CO and N$_2$) was allowed to flow through the sample at a space velocity of 50000/h and, concurrently, the gas temperature at the catalyst sample entrance was increased at a rate of 15°C/min. Then obtained was the gas temperature T50 (°C) at the catalyst sample entrance when the concentration of each of exhaust gas components (HC and CO) detected downstream of the sample reaches half of that of the corresponding exhaust gas component flowing into the sample (when the conversion efficiency reaches 50%). The measurement results on the inventive examples and the measurement results on the comparative examples are shown in Tables 4 and 5, respectively.

[Table 4]

| Inventive Example; Light-off temperature T50 (°C) | | | | | | | | | | |
|---|---|---|---|---|---|---|---|---|---|---|
| | | | ZrO$_2$/ZrNdMO ratio | | | | | | | |
| | | | No.1 | | No.2 | | No.3 | | No.4 | |
| | | | 55% by mole | | 75% by mole | | 80% by mole | | 90% by mole | |
| | | | HC | CO | HC | CO | HC | CO | HC | CO |
| ZrNdMO/ (ZrNdMO +Al$_2$O$_3$) ratio | No.1 | 10% by mass | 217 | 202 | 226 | 211 | 230 | 218 | 234 | 218 |
| | No.2 | 25% by mass | 209 | 195 | 220 | 205 | 225 | 211 | 229 | 215 |
| | No.3 | 50% by mass | 210 | 197 | 223 | 209 | 226 | 213 | | |
| | No.4 | 75% by mass | 213 | 200 | 225 | 212 | 227 | 216 | | |
| | No.5 | 90% by mass | 217 | 205 | 228 | 212 | 229 | 218 | | |
| Each of mixed oxide ZrNdMO and activated alumina is in the form of primary particles. | | | | | | | | | | |

[Table 5]

| Comparative Examples; Light-off temperature T50 (°C) | | | | | | | | | | |
|---|---|---|---|---|---|---|---|---|---|---|
| | | | ZrO$_2$/ZrNdMO ratio | | | | | | | |
| | | | No.1 | | No.2 | | No.3 | | No.4 | |
| | | | 55% by mole | | 75% by mole | | 80% by mole | | 90% by mole | |
| | | | HC | CO | HC | CO | HC | CO | HC | CO |
| ZrNdMO/ (ZrNdMO +Al$_2$O$_3$) ratio | No.1 | 10% by mass | 216 | 201 | 224 | 208 | 228 | 211 | 230 | 214 |
| | No.2 | 25% by mass | 215 | 200 | 223 | 206 | 224 | 207 | 225 | 206 |
| | No.3 | 50% by mass | 217 | 203 | 224 | 211 | 228 | 214 | | |
| | No.4 | 75% by mass | 222 | 208 | | | | | | |
| | No.5 | 90% by mass | 228 | 213 | | | | | | |
| Each of mixed oxide ZrNdMO and activated alumina is in the form of secondary particles. | | | | | | | | | | |

Reference to Tables 4 and 5 shows that when the ZrO$_2$ ratio was 55% to 75% by mole, both inclusive, and the ZrNdMO ratio was 25% to 90% by mass, both inclusive, the inventive examples exhibited lower light-off temperatures than the comparative examples. The reason for these results can also be deemed to be that the catalyst materials of the inventive examples had higher oxygen ion conductivity and higher heat resistance than those of the comparative examples.

Graphically shown in Figure 9 are the light-off temperatures of Inventive Examples 12, 22, 32 and 42 and Comparative Examples 12, 22, 32 and 42 having a fixed ZrNdMO ratio of 25% by mass and different ZrO$_2$ ratios. Furthermore, graphically shown in Figure 10 are the light-off temperatures of Inventive Examples 11 to 15 and Comparative Examples 11 to 15 having a fixed ZrO$_2$ ratio of 55% by mole and different ZrNdMO ratios.

Reference to Figure 9 shows that when the ZrO$_2$ ratio was 55% to 78% by mole, both inclusive, the inventive examples had lower light-off temperatures for both of HC and CO than the comparative examples and that particularly when the ZrO$_2$ ratio was 55% to 75% by mole, both inclusive, the inventive examples exhibited low light-off temperatures.

Reference to Figure 10 shows that when the ZrNdMO ratio was 25% to 90% by mass, both inclusive, the inventive examples had lower light-off temperatures than the comparative examples and that particularly when the ZrNdMO ratio was 25% to 50% by mass, both inclusive, the inventive examples exhibited relatively low light-off temperatures.

**Claims**

1. A particulate filter in which a catalyst layer is formed on the walls of exhaust gas channels in a filter body for trapping particulates exhausted from an engine, the catalyst layer containing a catalyst material in the form of secondary particles,

   **characterized in that**

   each said secondary particle is formed so that primary particles of activated alumina, primary particles of a Zr-based mixed oxide containing Zr and a rare earth metal Z are mixed and cohere together, wherein each said primary particle of the Zr-based mixed oxide contains, as the rare earth metal Z, Nd and a rare earth metal M other than Ce and Nd, and wherein each of the primary particles of the Zr-based mixed oxide contains $ZrO_2$ at a proportion of 55% to 78% by mole, both inclusive,
   the proportion of the primary particles of the Zr-based mixed oxide in the total amount of the primary particles of the activated alumina and the primary particles of the Zr-based mixed oxide is 25% to 90% by mass, both inclusive, and
   Pt is carried as a catalytic metal on the secondary particles.

2. The particulate filter of claim 1, wherein the rare earth metal M is at least one selected from the group consisting of La and Pr.

**Patentansprüche**

1. Partikelfilter, in dem auf den Wänden von Abgaskanälen in einem Filterkorpus zum Zurückhalten von aus einem Motor ausgestoßenen Partikeln eine Katalysatorschicht ausgebildet ist, wobei die Katalysatorschicht ein Katalysatormaterial in Form von sekundären Partikeln enthält,

   **dadurch gekennzeichnet, dass**
   jeder sekundäre Partikel so ausgebildet ist, dass primäre Partikel von aktiviertem Aluminiumoxid, primäre Partikel von Zr-basiertem Mischoxid, das Zr und ein Seltenerdmetall Z enthält, zusammengemischt sind und kohärieren, wobei als Seltenerdmetall Z jeder primäre Partikel des Zr-basierten Mischoxids Nd und ein anderes Seltenerdmetall M als Ce und Nd enthält und wobei jeder der primären Partikel des Zr-basierten Mischoxids $ZrO_2$ bei einem Anteil von 55 bis 78 Molprozent, beide Werte eingeschlossen, enthält,
   der Anteil der primären Artikel des Zr-basierten Mischoxids an der Gesamtmenge der primären Partikel des aktivierten Aluminiumoxids und der primären Partikel des Zr-basierten Mischoxids 25 bis 90 Masseprozent, beide Werte eingeschlossen, beträgt und
   Pt als katalytisches Metall auf den sekundären Partikeln geträgert ist.

2. Partikelfilter nach Anspruch 1, wobei das Seltenerdmetall M mindestens eines gewählt aus der Gruppe bestehend aus La und Pr ist.

**Revendications**

1. Filtre à particules dans lequel une couche catalytique est formée sur les parois de conduits de gaz d'échappement dans un corps de filtre pour piéger des particules provenant d'un moteur, la couche catalytique contenant un matériau catalytique sous la forme de particules secondaires,

   **caractérisé en ce que**
   chaque dite particule secondaire est formée de sorte que des particules primaires d'alumine activée, des particules primaires d'un oxyde mixte à base de Zr contenant du Zr et un métal terre rare Z sont mélangés et s'agglomèrent ensemble, chaque dite particule primaire de l'oxyde mixte à base de Zr contenant, comme métal terre rare Z, du Nd et un métal terre rare M autre que le Ce et le Nd, et chacune des particules primaires de l'oxyde mixte à base de Zr contenant du $ZrO_2$ dans une proportion de 55 % à 78 % en moles inclus,
   la proportion des particules primaires de l'oxyde mixte à base de Zr dans la quantité totale des particules primaires de l'alumine activée et des particules primaires de l'oxyde mixte à base de Zr étant de 25 % à 90 % en masse inclus, et
   du Pt est porté comme métal catalytique sur les particules secondaires.

2. Filtre à particules selon la revendication 1, dans lequel
   le métal terre rare M est au moins un métal choisi dans le groupe constitué de La et Pr.

FIG. 1

FIG. 2

FIG. 3

FIG. 4

FIG. 5

FIG. 6

## FIG. 7

## FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006326573 A
- JP 2007054713 A
- JP 2007083224 A
- JP 2007098200 A
- EP 1920835 A1
- EP 2022554 A2